(19) Europäisches Patentamt
European Patent Office
Office européen des brevets

(11) Veröffentlichungsnummer : **0 301 352 B1**

(12) # EUROPÄISCHE PATENTSCHRIFT

(45) Veröffentlichungstag der Patentschrift : **12.06.91 Patentblatt 91/24**

(51) Int. Cl.$^5$ : **C07F 9/38**, C02F 5/14, A61K 31/65

(21) Anmeldenummer : **88111519.0**

(22) Anmeldetag : **18.07.88**

(54) **Olefinische Diphosphonsäuren, Verfahren zu ihrer Herstellung und ihre Verwendung als Thresholder sowie komplexierend wirkende olefinische Diphosphonsäuren enthaltende Zusammensetzungen.**

(30) Priorität : **25.07.87 DE 3724653**

(43) Veröffentlichungstag der Anmeldung : **01.02.89 Patentblatt 89/05**

(45) Bekanntmachung des Hinweises auf die Patenterteilung : **12.06.91 Patentblatt 91/24**

(84) Benannte Vertragsstaaten : **DE**

(56) Entgegenhaltungen : **DE-A- 2 026 078**

(56) Entgegenhaltungen : **ZEITSCHRIFT FÜR NATURFORSCHUNG B (CHEMICAL SCIENCES), Band 43, Nr. 1, Januar 1988, Seiten 75-81, Tübingen, DE; H. BLUM: "Synthese, Eigenschaften und Struktur neuer 1,1-Diphosphonsäuren"**

(73) Patentinhaber : **Henkel Kommanditgesellschaft auf Aktien
Postfach 1100 Henkelstrasse 67
W-4000 Düsseldorf-Holthausen (DE)**

(72) Erfinder : **Blum, Helmut
Bertha-von-Suttner-Strasse 30
W-4000 Düsseldorf 13 (DE)**
Erfinder : **Hemmann, Siglinde
Kantstrasse 28
W-4005 Meerbusch 1 (DE)**

EP 0 301 352 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft 3-$R^1$-3-Oxo-prop-1-en-1,1-diphosphonsäuren und ihre Salze, Verfahren zu ihrer Herstellung und ihre Verwendung als Thresholder sowie die komplexierend wirkenden, die genannten olefinischen Diphosphonsäurederivate enthaltenden Zusammensetzungen.

1-Amino-1.1-diphosphonsäuren der nachfolgenden allgemeinen Formel (I)

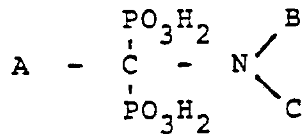

(I)

in der A, B und C für aliphatische, cycloaliphatische oder aromatische Kohlenwasserstoffreste stehen und B und C zusätzlich auch für ein H-Atom stehen können, sind aus dem Stand der Technik bekannt. Sie werden durch Umsetzung von Nitrilen mit Phosphortrihalogeniden und anschließende Hydrolyse bzw. Alkoholyse (DE-B-10 02 355), Umsetzung von Nitrilen mit Phosphoriger Säure (DE-A-26 25 767) oder Umsetzung von Carbosäureamiden mit Phosphortrihalogeniden bei Zusatz von Phosphoriger Säure und anschließender Hydrolyse (DE-A-19 58 123) hergestellt. Phosphonsäuren der oben genannten allgemeinen Formel (I) besitzen die Fähigkeit, Schwermetallionen und Erdalkalimetallionen zu komplexieren. Sie werden daher verbreitet als Komplexbildner bzw. Chelatbildner in der Wasserenthärtung, der Waschmittelherstellung, auf dem Textilsektor bzw. in der Papierherstellung verwendet.

Aus der DE-A-16 17 729 ist es bekannt, 1-Hydroxy-ethan-1,1-diphosphonsäure als Komplexierungsmittel zur Verhinderung von Zahnsteinbildung zu verwenden.

Als Komplexbildner bekannt sind ferner strukturverwandte Verbindungen der allgemeinen Formel (II) :

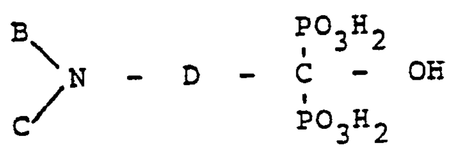

(II)

In (II) stehen B und C für Wasserstoff oder aliphatische oder aromatische Reste in Analogie zur oben genannten allgemeinen Formel (I), während D für einen Alkylenrest mit 1 bis 5 C-Atomen steht. In der DE-A-34 34 667 und der DE-C-25 34 391 wird die Verwendung von Verbindungen der allgemeinen Formel (II) sowie deren wasserlöslicher Salze als Komplexbildner für Erdalkali-Ionen, vorzugsweise Calcium-Ionen und als Thresholder beschrieben.

Die DE-A-2 026 078 beschreibt die Synthese von Ethylen-1,1-diphosphonsäure und seine Verwendung als Komplexierungsmittel für Schwermetalle.

Es wurde nun überraschend gefunden, daß durch Erhitzen von 3-$R^1$-3-Oxo-1-aminopropan-1,1-diphosphonsäuren mit wäßrigen Alkalihydroxidlösungen neue Verbindungen erhältlich sind und diese Verbindungen gute komplexierende Eigenschaften aufweisen und daher in geeigneten Zusammensetzungen als Thresholder zur Hemmung von Calcit-Scaling verwendet werden können. Dabei verhindern sie die Calcitablagerung auch bei sehr hoher Scale-Bildungskonzentration, wie sie beispielsweise bei der Erdölförderung auftritt, wenn Formationswasser und Seewasser aufeinander treffen.

Dabei war die Bildung solcher olefinischer Diphosphonsäuren unerwartet, da 1-Aminoalkan-1,1-diphosphonsäuren gegenüber Alkalilaugen auch beim Kochen sehr stabil sein sollen. Vielmehr hätte eher eine Umlagerung zu 1,2-Diphosphonsäuren der Struktur

$$RR'R''CC(OH)CH(PO_3H_2)CO(PO_3H_2)$$

erwartet werden können, wie es für die entsprechende analoge Verbindung $ClCH_2C(NH_2)(PO_3H_2)_2$ aus M. Fukuda et al, Chem. Lett. 1977, 1079 und K.H. Worms, H. Blum und H-U. Hempel Z. anorg. allg. Chem. 457 (1979), 214 bekannt ist.

Die Erfindung betrifft 3-$R^1$-3-Oxo-prop-1-en-1,1-diphosphonsäuren und ihre Salze der allgemeinen Formel (III)

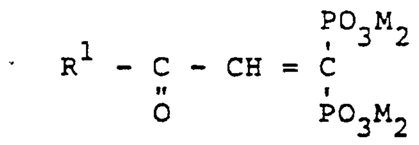

(III)

in der $R^1$ für

– eine tertiäre Alkylgruppe der allgemeinen Formel $-(R^2)C(R^3)(R^4)$, wobei $R^2$ und $R^3$ unabhängig voneinander eine $C_1$-$C_3$-Alkyl- und $R^4$ eine $C_1$-$C_{10}$-Alkylgruppe darstellen,

– eine $C_3$-$C_6$-Cycloalkylgruppe, die gegebenenfalls in 1-Stellung durch einen Methylrest substituiert ist oder

– eine Aryl- oder Heteroarylgruppe, die gegebenenfalls mit Halogen, $C_1$-$C_5$-Alkoxy, Di-$C_1$-$C_5$-alkylamino oder $C_1$-$C_5$-Alkyl substituiert ist, steht und

– M = H oder das Kation einer Base sein kann.

Die Erfindung betrifft außerdem ein Verfahren zur Herstellung der Verbindungen der allgemeinen Formel (III)
in der $R^1$ für eine tertiäre Alkylgruppe der allgemeinen Formel $-(R^2)C(R^3)(R^4)$, wobei $R^2$ und $R^3$ unabhängig voneinander eine $C_1$-$C_3$-Alkyl- und $R^4$ eine $C_1$-$C_{10}$-Alkylgruppe darstellen, eine $C_3$-$C_6$-Cycloalkylgruppe, die gegebenenfalls in 1-Stellung durch einen Methylrest substituiert ist oder eine Aryl- oder Heteroarylgruppe, die gegebenenfalls mit Halogen, $C_1$-$C_5$-Alkoxy, Di-$C_1$-$C_5$-alkylamino oder $C_1$-$C_5$-Alkyl substituiert ist, steht und M für H oder das Kation einer Base steht, das dadurch gekennzeichnet ist, daß man bei Temperaturen im Bereich von 80 bis 150°C eine 3-$R^1$-3-Oxo-1-aminopropan-1,1-diphosphonsäure der allgemeinen Formel (IV)

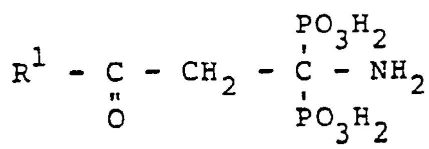

(IV)

in der $R^1$ die oben angegebenen Bedeutungen hat, mit wäßriger oder alkoholischer Alkalihydroxidlösung, wobei das Molverhältnis Alkalihydroxid zu Ausgangsstoff im Bereich von 5 : 1 bis 20 : 1 liegt, umsetzt. Die Reaktionsmischung wird mit einem Überschuß an Wasser versetzt und das gebildete Alkalisalz der Verbindung der allgemeinen Formel (III) durch Zusatz eines mit Wasser unbegrenzt mischbaren Alkohols ausgefällt und gegebenenfalls umgefällt. Hieraus kann dann mittels eines sauren Reaktionspartners in an sich bekannter Weise das Reaktionsprodukt der allgemeinen Formel (III), in dem M für H steht, isoliert werden. Gegebenenfalls werden anschließend die Reaktionsprodukte der allgemeinen Formel (III), in der M für H steht, in an sich bekannter Weise durch Zugabe basischer Reaktionpartner der Formel $M^+OH^-$, worin $M^+$ für ein Alkalimetall- oder Ammoniumkation $R^5R^6R^7R^8N^+$ steht, in dem $R^5$, $R^6$, $R^7$ und $R^8$ unabhängig voneinander Wasserstoff oder ein verzweigter oder unverzweigter Alkylrest mit 1 bis 12 C-Atomen sein können, in Verbindungen der Formel (III), überführt, in der M für ein Alkalimetall- oder Ammoniumkation der senannten Bedeutung steht. Die erhaltenen Verbindungen der Formel (III) werden nach an sich bekannten Methoden isoliert und gereinigt.

Die Erfindung betrifft außerdem die Verwendung der Verbindungen der allgemeinen Formel (III) als Komplexiermittel und als Thresholder.

Die Erfindung betrifft ferner Zusammensetzungen, die eine oder mehrere Verbindungen der allgemeinen Formel (III) mit den oben angegebenen Bedeutungen für $R^1$, $R^2$, $R^3$, $R^4$ und M in komplexierend wirksamen Konzentrationen enthalten.

Die erfindungsgemäßen neuen Verbindungen der oben angegebenen allgemeinen Formel (III) lassen sich – je nach Substituenten $R^1$, $R^2$, $R^3$, $R^4$ und M – als 3-$R^1$-3-Oxo-prop-1-en-1,1-diphosphonsäuren bzw. deren Salze bezeichnen.

$R^1$ kann einmal für eine tertiäre Alkylgruppe der allgemeinen Formel $-(R^2)C(R^3)(R^4)$ stehen.

Die Reste $R^2$ und $R^3$ in der oben angegebenen allgemeinen Formel (III) können unabhängig voneinander Methyl, Ethyl oder Propyl sein. Bevorzugt sind die beiden Reste $R^2$ und $R^3$ identisch. Besonders bevorzugt sind erfindungsgemäß Verbindungen (III), in denen beide Reste $R^2$ und $R^3$ für Methyl oder Ethyl stehen.

In der allgemeinen Formel (III) kann $R^4$ für unverzweigte oder verzweigte Alkylreste mit 1 bis 10 C-Atomen stehen. Als solche kommen Reste aus der Gruppe Methyl, Ethyl, n-Propyl, i-Propyl, n-Butyl, sec-Butyl, tert-Butyl, sowie n-Pentyl, n-Hexyl, n-Heptyl, n-Octyl, Nonyl und Decyl sowie deren verzweigte Isomere in Frage. Bevorzugt steht $R^4$ für unverzweigte Alkylreste mit 3 bis 6 C-Atomen.

$R^1$ kann weiterhin für eine gegebenenfalls substituierte $C_3$-$C_6$-Cycloalkylgruppe stehen. Geeignet sind Cyclopropyl, Cyclobutyl, Cyclopentyl, Cyclohexyl, 1-Methylcyclopropyl, 1-Methylcyclobutyl, 1-Methylcyclopentyl und 1-Methylcyclohexyl.

$R^1$ kann schließlich für eine Aryl- oder Heteroarylgruppe, die gegebenenfalls mit Halogen, $C_1$-$C_5$-Alkoxy, Di-$C_1$-$C_5$-alkylamino oder $C_1$-$C_5$-Alkyl substituiert ist, stehen. Eine geeignete Arylgruppe ist insbesondere Phenyl. Geeignete Heteroarylgruppen sind solche, die 5 oder 6 Glieder aufweisen und vorzugsweise O–, S– oder N-Atome besitzen. Sie können anelliert oder kondensiert sein. Weitere, gegebenenfalls substituierte Aryl- oder Heteroarylgruppen sind 2-Methylphenyl, 3-Methylphenyl, 4-Methylphenyl, 2,4-Dimethylphenyl, 2-Fluorphenyl, 3-Fluorphenyl, 4-Fluorphenyl, 2-Chlorphenyl, 3-Chlorphenyl, 4-Chlorphenyl, 2,4-Dichlorphenyl, 3,4-Dichlorphenyl, 3,5-Dichlorphenyl, 2-Methoxyphenyl, 3-Methoxyphenyl, 4-Methoxyphenyl, 3,4-Dimethoxyphenyl, 3,4,5-Trimethoxyphenyl, 2-Furyl, 3-Furyl, 5-Brom-2-methyl-3-furyl, 2-Thienyl, 3-Thienyl und 5-Methyl-2-thienyl.

Komplexierend wirksam und damit vorzugsweise Gegenstand der erfindung sind Verbindungen der oben angegebenen allgemeinen Formel (III), in der M statt des Protons für die freien Säuren auch für Alkalimetall-Kationen oder ein Ammoniumkation der allgemeinen Formel $R^5R^6R^7R^8N^+$ stehen kann. Ein wesentlicher Vorteil dieser von den freien Säuren abgeleiteten Salze ist es, daß sie die Wasserlöslichkeit der Verbindungen der allgemeinen Formel (III), in der M für H steht, deutlich verbessern. Damit wird natürlich die Verwendbarkeit derartiger Verbindungen in Mitteln, die einen Threshold-Effekt ausüben, ebenfalls verbessert. Als Alkalimetall-Kationen kommen erfindungsgemäß insbesondere Kationen wie $Na^+$ oder $K^+$ in Frage. M kann jedoch auch für Ammoniumkationen der obigen allgemeinen Struktur stehen, in der $R^5$, $R^6$, $R^7$ und $R^8$ unabhängig voneinander Wasserstoff oder verzweigte oder unverzweigte Alkylreste mit 1 bis 12 C-Atomen sein können. Als Alkylreste kommen damit alle verzweigten und unverzweigten Reste aus der Gruppe Methyl, Ethyl, Propyl, Butyl, Pentyl, Hexyl, Heptyl, Octyl, Nonyl, Decyl, Undecyl und Dodecyl in Frage.

Als wasserlösliche Salze werden erfindungsgemäß Alkalimetallsalze der allgemeinen Formel (III) bevorzugt, in der M für ein Alkalimetall-Kation steht. Besonders bevorzugt sind die Natriumsalze.

Die genannten Verbindungen der allgemeinen Formel (III) werden zwar nach einem Verfahren hergestellt, das summarisch einer Eliminierung durch Abspaltung von Ammoniak entspricht. Dieses Verfahren muß aber dennoch als chemisch eigenartig angesehen werden, da eine am α-C-Atom befindliche Aminogruppe im basischen Milieu nicht leicht zu eliminieren ist. Dies geschieht erfindungsgemäß durch Umsetzung von 3-$R^1$-3-Oxo-1-aminopropan-1,1-diphosphonsäure der allgemeinen Formel (IV)

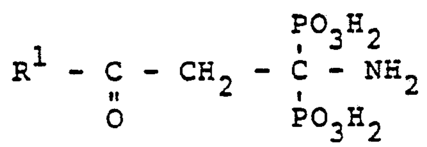

(IV)

in der $R^1$ die oben genannten Bedeutungen haben kann, mit wäßriger oder alkoholischer Alkalihydroxidlösung, wobei das Molverhältnis Alkalihydroxid zu Ausgangsstoff im Bereich von 5 : 1 bis 20 : 1 liegt, bevorzugt jedoch 12 : 1 ist. Mit Vorteil wird NaOH in wäßriger Lösung als Alkalihydroxid für das erfindungsgemäße Verfahren verwendet. Die Herstellung der als Ausgangsstoffe verwendeten 3-$R^1$-3-Oxo-1-aminopropan-1,1-diphosphonsäuren der allgemeinen Formel (IV), in denen $R^1$ für eine substituierte tertiäre Alkylgruppe steht, ist in der DE-A-36 11 522 beschrieben. Die Herstellung von Verbindungen der allgemeinen Formel (IV), in denen $R^1$ für eine gegebenenfalls substituierte Cycloalkylgruppe oder eine gegebenenfalls substituierte Arylgruppe oder Heteroarylgruppe steht, kann in Analogie zu diesem Verfahren unter Verwendung der aus der EP-A-0 089 011 bekannten 3-$R^1$-3-Oxo-propionsäurenitrile erfolgen.

Die Reaktionstemperaturen bewegen sich zweckmäßigerweise im Bereich von 80 bis 150°C, vorzugsweise im Bereich von 100 bis 140°C. Bei der Durchführung wird im allgemeinen die Verbindung der allgemeinen Formel (IV) vorgelegt und anschließend die wäßrige Alkalihydroxidlösung eingetragen. Die Reaktionsmischung wird über einen gewissen Zeitraum, beispielsweise 20 bis 50 Stunden, in dem angegebenen Temperaturbereich gerührt. Die Vervollständigung der Umsetzung kann durch übliche chromatographische Methoden überprüft werden.

Die Konzentration der Alkalihydroxide in wasser oder Alkohol beträgt 15 bis 50 Gew.-%, vorzugsweise 20 bis 25 Gew.-%.

Anschließend wird die Reaktionsmischung mit einem Überschuß an Wasser versetzt und das gebildete Alkalisalz der Verbindung der allgemeinen Formel (III) durch Zusatz eines mit Wasser unbegrenzt mischbaren Alkohols ausgefällt und gegebenenfalls umgefällt. Hieraus kann dann mittels eines sauren Reaktionspartners in an sich bekannter Weise das Reaktionsprodukt der allgemeinen Formel (II), in dem M für H steht, isoliert werden. Geeignete, mit Wasser unbegrenzt mischbare Alkohole sind Methanol, Ethanol, n-Propanol, i-Propanol und t-Butanol. Bevorzugt ist Methanol.

Geeignete saure Reaktionspartner sind Mineralsäuren, wie Salz-, Schwefel-, Salpeter- oder Phosphorsäure, organische Säuren sowie saure und stark saure Ionenaustauscherharze. Bevorzugt sind stark saure Ionenaustauscherharze.

Die erhaltenen Reaktionsprodukte der allgemeinen Formel (III), in der M für H steht, werden dann gegebenenfalls durch Zugabe basischer Reaktionspartner der Formel $M^+OH^-$, worin $M^+$ für ein Alkalimetall- oder Ammoniumkation steht, in ihre wasserlöslichen Salze, bevorzugt ihre Alkalimetallsalze, besonders bevorzugt ihre Natriumsalze, überführt und nach an sich bekannten Methoden aus der Reaktionsmischung isoliert und gereinigt. Dies kann beispielsweise dadurch geschehen, daß man die bei erhöhter Temperatur in der Reaktionsmischung gelösten Reaktionsprodukte durch Abkühlen auskristallisiert oder durch Zugabe eines Lösungsmittels ausfällt, die erhaltenen Niederschläge oder Kristalle durch Abdekantieren der Mutterlauge oder durch Filtration von den gelösten Reaktionspartnern trennt und die Niederschläge bzw. Kristalle anschließend trocknet und gegebenenfalls durch Umkristallisieren weiter reinigt.

Überraschenderweise wurde außerdem gefunden, daß die genannten Verbindungen der allgemeinen Formel (III) ausgezeichnete komplexierende Eigenschaften gegenüber Erdalkali-Ionen, insbesondere Calcium-Ionen, zeigen.

Außer dem ausgezeichneten Komplexiervermögen zeichnen sich Verbindungen der allgemeinen Formel (III) durch eine starke Threshold-Aktivität aus, d.h. sie sind in der Lage, die Ausfällung schwerlöslicher Erdalkalimetallsalze auch in Impfmengen, das sind unterstöchiometrische Mengen, zu verhindern.

Sie sind als Komplexiermittel sehr vielseitig verwendbar : Beispielsweise können sie speziell für die Vorgänge der Wasserenthärtung Anwendung finden, wobei die vorstehend erwähnte Threshold-Wirkung eine wesentliche Rolle spielt. Es ist daher nicht notwendig, mit stöchiometrischen Mengen zu arbeiten, sondern man kann auch mit unterstöchiometrischen Mengen Calcitfällungen erheblich verzögern.

Sie sind auch als Korrosions- und Steinansatzverhütungsmittel für Kühlwässer, insbesondere in Kombination mit an sich bekannten Zusätzen, gut geeignet.

Dazu werden eine oder mehrere Verbindungen der angegebenen allgemeinen Formel (III), in der $R^1$ die oben angegebene Bedeutung hat, bevorzugt in Mengen von 1 bis 50 mg/l in Zusammensetzungen eingesetzt, die als Thresholder gegen Calcitbildung Verwendung finden. Besonders gute Wirksamkeit zeigen dabei Zusammensetzungen, die eine oder mehrere Verbindungen der allgemeinen Formel (III) in Konzentrationen von 5 bis 50 mg/l enthalten, wobei in der allgemeinen Formel (III) $R^1$ für eine tertiäre Alkylgruppe der allgemeinen Formel $-(R^2)C(R^3)(R^4)$ steht, $R^4$ für einen geradkettigen oder verzweigten Alkylrest mit 3 bis 6 C-Atomen, $R^2$ und $R^3$ für Methyl oder Ethyl und M für ein Alkalimetallkation, bevorzugt ein Natriumion, stehen.

Derartige Zusammensetzungen sind bestens geeignet, die Abscheidung von Calcit auch bei sehr hohen Scale-Bildungs-Konzentrationen zu verhindern. Sie benötigen dabei eine vergleichsweise niedrige Konzentration, die sie anderen strukturell vergleichbaren komplexierenden Zusammensetzungen deutlich überlegen macht.

Die erfindungsgemäßen Verbindungen der allgemeinen Formel (III) sind auch geeignet für pharmazeutische Zwecke hinsichtlich der Behandlung von Störungen des Calciums- bzw. des Phosphatstoffwechsels und der damit verbundenen Erkrankungen. Weiterhin können die erfindungsgemäßen Verbindungen in kosmetischen Zubereitungen in Zahn- und Mundpflegemitteln, beispielsweise Mundwässern, Mundpulvern, Zahncremes oder Zahnpasten, mouth washes sowie Zahnprothesehaftmitteln, zur Zahnsteintherapie und Zahnsteinprophylaxe verwendet werden. Auch zur Skelettszintigraphie in Verbindung mit Technetium −99 m sind die erfindungsgemäßen Verbindungen verwendbar.

Die Erfindung wird durch die nachfolgenden Beispiele näher erläutert.

## Beispiel 1

0,38 mol 4-Ethyl-4-methyl-3-oxo-1-aminohexan-1,1-diphosphonsäure (IV, $R^2 = R^3 = CH_2CH_3$, $R^4 = CH_3$) wurden 48 h im Teflonkolben mit 750 ml (4,68 mol) 25%iger Natronlauge auf 120°C erhitzt. Das Reaktionsprodukt wurde anschließend in so viel Wasser aufgenommen, daß eine klare Lösung entstand.

Durch Zusatz von Methanol wurde das Tetranatriumsalz der 4-Ethyl-4-methyl-3-oxo-hex-1-en-1,1-diphosphonsäure (III, $R^2 = R^3 = CH_2CH_3$, $R^4 = CH_3$, M = Na) ausgefällt und zwecks weiterer Reinigung umgefällt. Das Tetranatriumsalz wurde an der Luft getrocknet und lag dann als wasserhaltiges Produkt vor. Ausbeute : 75% der Theorie.

Atomverhältnis P : C : Na = 2,00 : 9,16 : 3,93
(berrechnet : 2 : 9 : 4).

Zur Herstellung der freien Säure wurde eine 10 Gew.-%ige Lösung dieses Tetranatriumsalzes über eine Säule gegeben, die mit einem stark sauren Ionenaustauscherharz gefüllt war. Das Eluat wurde dann bis zur

öligen Konsistenz eingeengt und man erhielt die 4-Ethyl-4-methyl-3-oxo-hex-1-en-1,1-disphosphonsäure als Kristalle in wasserfreier Form.
Schmelzpunkt : 146 bis 147°C.
Elementaranalyse (%) :
berechnet : C 36,00 H 6,00 P 20,66
gefunden : C 36,10 H 5,93 P 20,60

Beispiel 2

Nach der gleichen Methode, wie sie in Beispiel 1 beschrieben worden ist, wurden 0,38 mol 4,4-Dimethyl-3-oxo-1-aminoheptan-1,1-diphosphonsäure (IV, $R^2 = R^3 = CH_3$, $R^4 = n\text{-}C_3H_7$) mit Natronlauge erhitzt, die Reaktionsmischung in Wasser aufgenommen und entsprechend aufgearbeitet. Die Ausbeute an 4,4-Dimethyl-3-oxo-hept-1-en-1,1-diphosphonsäure (III, $R^2 = R^3 = CH_3$ ; $R^4 = n\text{-}C_3H_7$) betrug 73% der Theorie.
Atomverhältnis P : C : Na = 2,00 : 8,90 : 3,89
(berechnet : 2 : 9 : 4).
Hieraus wurde die freie Säure unter den in Beispiel 1 beschriebenen Bedingungen hergestellt.
Schmelzpunkt : 162 bis 163°C
Elementaranalyse (%) :
berechnet : C 36,00 H 6,00 P 20,66
gefunden : C 36,14 H 5,89 P 20,60

Beispiel 3

Nach der Methode, wie sie in Beispiel 1 beschrieben worden ist, wurden 0,38 mol 4,4-Dimethyl-3-oxo-1-aminodecan-1,1-diphosphonsäure (IV, $R^2 = R^3 = CH_3$, $R^4 = n\text{-}C_7H_{15}$) in das Tetranatriumsalz der 4,4-Dimethyl-3-oxo-dec-1-en-1,1-diphosphonsäure (III, $R^2 = R^3 = CH_3$, $R^4 = n\text{-}C_7H_{15}$, M = Na) umgewandelt. Die Ausbeute betrug 65% der Theorie.
Atomverhältnis P : C : Na = 2,00 : 11,88 : 4,06
(berechnet 2 : 12 : 4).
Die freie Säure wurde nach den in Beispiel 1 beschriebenen Bedingungen hergestellt und fällt dann in pastenförmiger Form an.

Beispiel 4

Die Threshold-Aktivität, d.h. die Fähigkeit des Komplexbildners, in unterstöchiometrischen Mengen das Scaling schwerlöslicher Calciumsalze (z.B. Calcit) zu verhindern bzw. zu verzögern, wurde in synthetischen Salzsolen, die in ihrer Zusammensetzung Lagerstätten-Injektionswässern niedriger Salinität entsprechen, getestet.

Die Threshold-Aktivität der erfindungsgemäßen olefinischen Diphosphonsäuren wurde gegenüber Calcium von 5 bis 50 ppm untersucht.

Die Calcit-Scale-Bildungskonzentration betrug 4,133 g Calciumcarbonat/l und die Elektrolytkonzentration 36 g Natriumchlorid/l.

Die Testlösungen wurden 3 Tage bei 70°C im Wasserbad bei einem pH-Wert von 7,3 gelagert. Anschließend wurde der in Lösung verbliebene Anteil an Calciumsalz bestimmt.

Die Bestimmung erfolgte nach der Standard-Testmethode 03-74 der National Association of Corrosion Engineers.

Die Threshold-Wirkung der erfindungsgemäßen olefinischen Diphosphonsäuren geht aus Fig. 1 hervor.

Zum Vergleich wurde noch die Threshold-Ativität von Ethylendiphosphonsäure bestimmt. Die Ergebnisse sind in Fig. 1 ausgeführt. Diese zeigt den Inhibierungsgrad (in %) als Funktion der Inhibitorkonzentration (in ppm).

Hier beziehen sich die verwendeten Markierungen auf folgende Verbindungen :

+ : Verbindung gemäß Beispiel 2, als Tetranatriumsalz
* : Verbindung gemäß Beispiel 1, als Tetranatriumsalz
θ : Ethylendiphosphonsäure, zum Vergleich

Aus dem Vergleich der erfindungsgemäßen olefinischen Diphosphonsäuren in Form ihrer Tetranatriumsalze gemäß Beispiel 1 und 2 mit der bekannten Ethylendiphosphonsäure ist ersichtlich, daß die erfindungsgemäßen Verbindungen ein wesentliches Komplexierungsvermögen aufweisen und eine wesentlich erhöhte

Thresholdwirkung haben und bereits in kleinen Inhibitorkonzentrationen eine Inhibierung von 90% erreichen.

## Ansprüche

1. 3-$R^1$-3-Oxo-prop-1-en-1,1-diphosphonsäuren und ihre Salze der allgemeinen Formel (III)

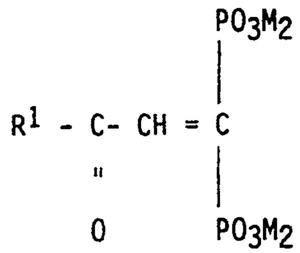

(III)

in der $R^1$ für

- eine tertiäre Alkylgruppe der allgemeinen Formel $-(R^2)C(R^3)(R^4)$, wobei $R^2$ und $R^3$ unabhängig voneinander eine $C_1$-$C_3$-Alkyl- und $R^4$ eine $C_1$-$C_{10}$-Alkylgruppe darstellen,
- eine $C_3$-$C_6$-Cycloalkylgruppe, die gegebenenfalls in 1-Stellung durch einen Methylrest substituiert ist oder
- eine Aryl- oder Heteroarylgruppe, die gegebenenfalls mit Halogen, $C_1$-$C_5$-Alkoxy, Di-$C_1$-$C_5$-alkylamino oder $C_1$-$C_5$-Alkyl substituiert ist, steht und
- M = H oder das Kation einer Base sein kann.

2. Verbindungen der allgemeinen Formel (III) nach Anspruch 1, dadurch gekennzeichnet, daß in der allgemeinen Formel (III) $R^1$ für eine tertiäre Alkylgruppe der allgemeinen Formel $-(R^2)C(R^3)(R^4)$ steht, wobei $R^2$ und $R^3$ die oben genannten Bedeutungen haben, $R^4$ für unverzweigte Alkylreste mit 3 bis 6 C-Atomen und M für ein Kation einer wasserlöslichen Base steht.

3. Verbindungen der allgemeinen Formel (III) nach Ansprüchen 1 und 2, dadurch gekennzeichnet, daß in der allgemeinen Formel (III) $R^1$ für eine tertiäre Alkylgruppe der allgemeinen Formel $-(R^2)C(R^3)(R^4)$ steht, wobei $R^4$ die oben genannten Bedeutungen hat, beide Reste $R^2$ und $R^3$ gleich sind und für Methyl oder Ethyl stehen.

4. Verbindungen der allgemeinen Formel (III) nach Ansprüchen 1 bis 3, dadurch gekennzeichnet, daß M für ein Alkalimetallkation, bevorzugt ein Natriumion, oder ein Ammoniumkation der allgemeinen Formel $R^5R^6R^7R^8N^+$ steht, in der $R^5$, $R^6$, $R^7$ und $R^8$ unabhängig voneinander Wasserstoff oder ein unverzweigter oder verzweigter Alkylrest mit 1 bis 12 C-Atomen sind.

5. Verfahren zur Herstellung von 3-$R^1$-3-Oxo-prop-1-en-1,1-diphosphonsäuren und ihren Salzen der allgemeinen Formel (III)

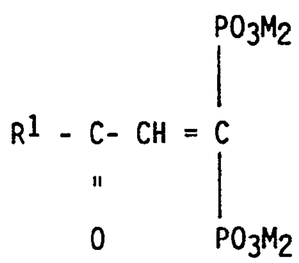

(III)

in der $R^1$ für

- eine tertiäre Alkylgruppe der allgemeinen Formel $-(R^2)C(R^3)(R^4)$, wobei $R^2$ und $R^3$ unabhängig voneinander eine $C_1$-$C_3$-Alkyl- und $R^4$ eine $C_1$-$C_{10}$-Alkylgruppe darstellen,
- eine $C_3$-$C_6$-Cycloalkylgruppe, die gegebenenfalls in 1-Stellung durch einen Methylrest substituiert ist oder
- eine Aryl- oder Heteroarylgruppe, die gegebenenfalls mit Halogen, $C_1$-$C_5$-Alkoxy, Di-$C_1$-$C_5$-alkylamino oder $C_1$-$C_5$-Alkyl substituiert ist, steht und
- M = H oder das Kation einer Base sein kann, dadurch gekennzeichnet, daß man

(a) eine 3-$R^1$-3-Oxo-1-aminopropan-1,1-diphosphonsäure der allgemeinen Formel (IV)

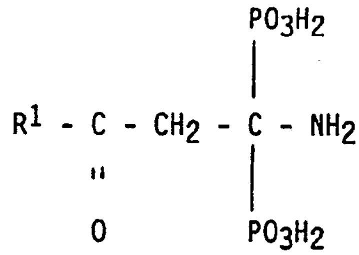 (IV)

in der $R^1$ die oben angegebenen Bedeutungen hat, mit wäßriger oder alkoholischer Alkalihydroxidlösung, wobei das Molverhältnis Alkalihydroxid zu Ausgangsstoff im Bereich von 5 : 1 bis 20 : 1 liegt, bei Temperaturen im Bereich von 80 bis 150°C umsetzt,

(b) die Reaktionsmischung mit einem Überschuß Wasser versetzt und das gebildete Alkalisalz der Verbindung der allgemeinen Formel (III) durch Zusatz eines mit Wasser unbegrenzt mischbaren Alkohols ausfällt und gegebenenfalls umfällt,

(c) gegebenenfalls mittels eines sauren Reaktionspartners in an sich bekannter Weise die Reaktionsprodukte der allgemeinen Formel (III), in der M für H steht, erzeugt,

(d) gegebenenfalls die Reaktionsprodukte der allgemeinen Formel (III), in der M für H steht, in an sich bekannter Weise durch Zugabe basischer Reaktionspartner der Formel $M^+OH^-$, worin $M^+$ für ein Alkalimetall- oder Ammoniumkation $R^5R^6R^7R^8N^+$ steht, in dem $R^5$, $R^6$, $R^7$ und $R^8$ unabhängig voneinander Wasserstoff oder ein verzweigter oder unverzweigter Alkylrest mit 1 bis 12 C-Atomen sein können, in Verbindungen der Formel (III), überführt, in der M für ein Alkalimetall- oder Ammoniumkation der genannten Bedeutung steht

(e) und die erhaltenen Verbindungen der Formel (III) nach an sich bekannten Methoden isoliert und reinigt.

6. Verfahren nach Anspruch 5, dadurch gekennzeichnet, daß man als Alkalihydroxidlösung Natronlauge verwendet.

7. Verfahren nach Ansprüchen 5 und 6, dadurch gekennzeichnet, daß man die Reaktion im Temperaturbereich von 100 bis 140°C durchführt.

8. Verfahren nach Ansprüchen 5 bis 7, dadurch gekennzeichnet, daß das Molverhältnis Alkalihydroxid zu Ausgangsstoff 12 : 1 ist.

9. Verfahren nach Ansprüchen 5 bis 8, dadurch gekennzeichnet, daß man als mit Wasser unbegrenzt mischbaren Alkohol Methanol verwendet.

10. Verfahren nach Ansprüchen 5 bis 9, dadurch gekennzeichnet, daß man als sauren Reaktionspartner eine Mineralsäure, eine organische Säure oder ein saures Ionenaustauscherharz verwendet.

11. Verfahren nach Anspruch 10, dadurch gekennzeichnet, daß man als sauren Reaktionspartner ein stark saures Ionenaustauscherharz verwendet.

12. Verfahren nach Ansprüchen 5 bis 11, dadurch gekennzeichnet, daß man als basischen Reaktionspartner $M^+OH^-$ NaOH verwendet.

13. Verwendung der Verbindungen der allgemeinen Formel (III) nach Ansprüchen 1 bis 4 als Komplexierungsmittel und Thresholder.

14. Zusammensetzungen enthaltend eine oder mehrere Verbindungen der allgemeinen Formel (III)

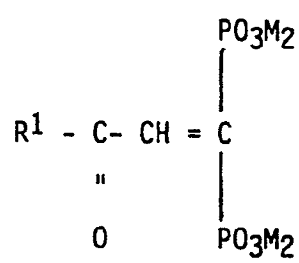 (III)

in der $R^1$ für

– eine tertiäre Alkylgruppe der allgemeinen Formel $-(R^2)C(R^3)(R^4)$, wobei $R^2$ und $R^3$ unabhängig voneinander eine $C_1$-$C_3$-Alkyl- und $R^4$ eine $C_1$-$C_{10}$-Alkylgruppe darstellen,

– eine $C_3$-$C_6$-Cycloalkylgruppe, die gegebenenalls in 1-Stellung durch einen Methylrest substituiert ist oder

– eine Aryl- oder Heteroarylgruppe, die gegebenenfalls mit Halogen, $C_1$-$C_5$-Alkoxy, Di-$C_1$-$C_5$-alkylamino oder $C_1$-$C_5$-Alkyl substituiert ist, steht und

– M = H oder das Kation einer Base sein kann, in komplexierend wirksamen Konzentrationen.

15. Zusammensetzungen nach Anspruch 14, enthaltend eine oder mehrere Verbindungen der allgemeinen Formel (III) in der $R^1$, $R^2$, $R^3$, $R^4$ und M die oben angegebenen Bedeutungen haben, in Konzentrationen von 1 bis 50 ppm.

16. Zusammensetzungen nach Anspruch 14, enthaltend ein oder mehrere Verbindungen der allgemeinen Formel (III), in der $R^1$ für eine tertiäre Alkylgruppe der allgemeinen Formel $-(R^2)C(R^3)(R^4)$, $R^2$ und $R^3$ für Methyl oder Ethyl, $R^4$ für einen geradkettigen oder verzweigten Alkylrest mit 3 bis 6 C-Atomen, und M für ein Alkalimetallkation, bevorzugt für ein Natriumion, stehen, in Konzentrationen von 5 bis 50 ppm.

## Claims

1. 3-$R^1$-3-oxoprop-1-ene-1,1-diphosphonic acids corresponding to the following general formula

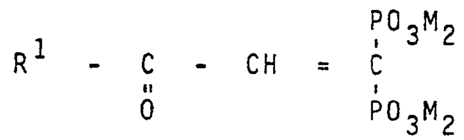

(III)

in which $R^1$ represents

– a tertiary alkyl group having the general formula $-(R^2)C(R^3)(R^4)$, where $R^2$ and $R^3$ independently of one another represent a $C_1$-$C_3$ alkyl group while $R^4$ represents a $C_1$-$C_{10}$ alkyl group

– an optionally 1-methyl-substituted $C_3$-$C_6$ cycloalkyl group or

– an aryl or heteroaryl group optionally substituted by halogen, $C_1$-$C_5$ alkoxy, di-$C_1$-$C_5$-alkylamino or $C_1$-$C_5$ alkyl and

– M may be H or the cation of a base, and salts thereof.

2. Compounds corresponding to general formula (III) as claimed in claim 1, characterized in that, in general formula (III), $R^1$ is a tertiary alkyl group corresponding to the general formula $-(R^2)C(R^3)(R^4)$, where $R^2$ and $R^3$ are as defined above, $R^4$ represents unbranched $C_3$-$C_6$ alkyl radicals and M is a cation of a water-soluble base.

3. Compounds corresponding to general formula (III) as claimed in claims 1 and 2, characterized in that, in general formula (III), $R^1$ is a tertiary alkyl group corresponding to the general formula $-(R^2)C(R^3)(R^4)$, where $R^4$ is as defined above, $R^2$ and $R^3$ are the same and represent methyl or ethyl.

4. Compounds corresponding to general formula (III) as claimed in claims 1 to 3, characterized in that M is an alkali metal cation, preferably a sodium ion, or an ammonium cation corresponding to the general formula $R^5R^6R^7R^8N^+$, in which $R^5$, $R^6$, $R^7$ and $R^8$ independently of one another represent hydrogen or an unbranched or branched $C_1$-$C_{12}$ alkyl radical.

5. A process for the production of 3-$R^1$-3-oxoprop-1-ene-1,1-diphosphonic acids corresponding to the following general formula

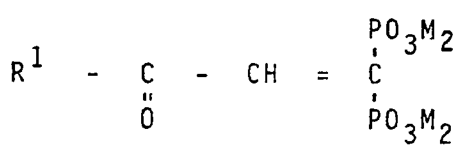

(III)

in which $R^1$ represents

– a tertiary alkyl group having the general formula $-(R^2)C(R^3)(R^4)$, where $R^2$ and $R^3$ independently of one another represent a $C_1$-$C_3$ alkyl group while $R^4$ represents a $C_1$-$C_{10}$ alkyl group

– an optionally 1-methyl-substituted $C_3$-$C_6$ cycloalkyl group or

– an aryl or heteroaryl group optionally substituted by halogen, $C_1$-$C_5$ alkoxy, di-$C_1$-$C_5$-alkylamino or $C_1$-$C_5$ alkyl and

– M may be H or the cation of a base, and salts thereof, characterized in that

(a) a 3-$R^1$-3-oxo-1-aminopropane-1,1-diphosphonic acid corresponding to the following general formula

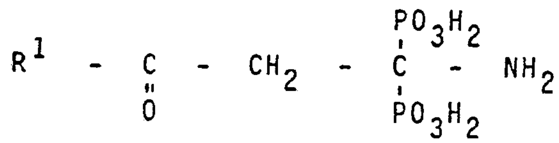 (IV)

in which $R^1$ is as defined above, is reacted with aqueous or alcoholic alkali hydroxide solution, the molar ratio of alkali hydroxide to starting material being from 5 : 1 to 20 : 1, at temperatures in the range from 80 to 150°C,

(b) an excess of water is added to reaction mixture and the resulting alkali salt of the compound corresponding to general formula (III) is precipitated by addition of an alcohol infinitely miscible with water and isoptionally dissolved and reprecipitated,

(c) the reaction products of general formula (III), in which M represents hydrogen, are optionally produced in known manner using an acidic reagent,

(d) the reaction products of general formula (III), in which M represents hydrogen, are optionally converted in known manner into compounds of formula (III), in which M is an alkali metal or ammonium cation as defined above, by addition of basic reagents corresponding to the formula $M^+OH^-$, in which $M^+$ is an alkali metal or ammonium cation $R^5R^6R^7R^8N^+$, in which $R^5$, $R^6$, $R^7$ and $R^8$ independently of one another may represent hydrogen or a branched or unbranched $C_1$-$C_{12}$ alkyl radical,

(e) and the resulting compounds of formula (III) are isolated and purified by methods known per se.

6. A process as claimed in claim 5, characterized in that sodium hydroxide is used as the alkali hydroxide solution.

7. A process as claimed in claims 5 and 6, characterized in that the reaction is carried out at temperatures of 100 to 140°C.

8. A process as claimed in claims 5 to 7, characterized in that the molar ratio of alkali hydroxide to starting material is 12 : 1.

9. A process as claimed in claims 5 to 8, characterized in that methanol is used as the alcohol infinitely miscible with water.

10. A process as claimed in claims 5 to 9, characterized in that a mineral acid, an organic acid or an acidic ion exchanger resin is used as the acidic reagent.

11. A process as claimed in claim 10, characterized in that a strongly acidic ion exchanger resin is used as the acidic reagent.

12. A process as claimed in claims 5 to 11, characterized in that NaOH is used as the basic reagent $M^+OH^-$.

13. The use of the compounds corresponding to general formula (III) claimed in claims 1 to 4 as complexing agents and thresholders.

14. Compositions containing one or more compounds corresponding to the following general formula

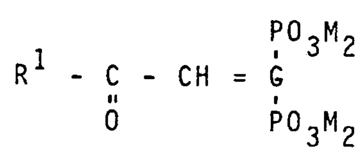 (III)

in which $R^1$ represents

– a tertiary alkyl group having the general formula $-(R^2)C(R^3)(R^4)$, where $R^2$ and $R^3$ independently of one another represent a $C_1$-$C_3$ alkyl group while $R^4$ represents a $C_1$-$C_{10}$ alkyl group

– an optionally 1-methyl-substituted $C_3$-$C_6$ cycloalkyl group or

– an aryl or heteroaryl group optionally substituted by halogen, $C_1$-$C_5$ alkoxy, di-$C_1$-$C_5$-alkylamino or $C_1$-$C_5$ alkyl and

– M may be H or the cation of a base, in complexing concentrations.

15. Compositions as claimed in claim 14 containing one or more compounds corresponding to general formula (III), in which $R^1$, $R^2$, $R^3$, $R^4$ and M are as defined above, in concentrations of 1 to 50 ppm.

16. Compositions as claimed in claim 14 containing one or more compounds corresponding to general formula (III), in which $R^1$ is a tertiary alkyl group corresponding to the general formula $-(R^2)C(R^3)(R^4)$, $R^2$ and $R^3$ represent methyl or ethyl, $R^4$ is a linear or branched $C_3$-$C_8$ alkyl radical and M is an alkali metal cation, preferably a sodium ion, in concentrations of 5 to 50 ppm.

**Revendications**

1. Acides 3-$R^1$-3-oxo-prop-1-ène-1,1-diphosphoniques et leurs sels, répondant à la formule générale (III)

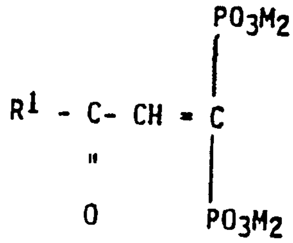

(III)

dans laquelle $R^1$ représente :

– un groupe alkyle tertiaire de la formule générale $-(R^2)C(R^3)(R^4)$, où $R^2$ et $R^3$ représentent indépendamment l'un de l'autre un groupe alkyle en $C_1$-$C_3$ et $R^4$ un groupe alkyle en $C_1$-$C_{10}$,

– un groupe cycloalkyle en $C_3$-$C_6$, qui est substitué éventuellement en position 1 par un radical méthyle ou

– un groupe aryle ou hétéroaryle, qui est substitué éventuellement par un halogène, un alcoxy en $C_1$-$C_5$, un dialkylamino en $C_1$-$C_5$ ou un alkyle en $C_1$-$C_5$ et où M peut être H ou le cation d'une base.

2. Composés de la formule générale (III) selon la revendication 1, caractérisés en ce que, dans la formule générale (III), $R^1$ représente un groupe alkyle tertiaire de la formule générale $(R^2)C(R^3)(R^4)$ où $R^2$ et $R^3$ ont les significations précitées, où $R^4$ représente des radicaux alkyles non ramifiés à 3 à 6 atomes de carbone et M représente un cation d'une base soluble dans l'eau.

3. Composés de la formule générale (III) selon les revendications 1 et 2, caractérisés en ce que, dans la formule générale (III), $R^1$ représente un groupe alkyle tertiaire de la formule générale $-(R^2)C(R^3)(R^4)$ où $R^4$ a les significations précitées, les deux radicaux $R^2$ et $R^3$ sont identiques et représentent un radical méthyle ou éthyle.

4. Composés de la formule générale (III) selon les revendications 1 à 3, caractérisés en ce que M représente un cation de métal alcalin et, de préférence, un ion sodium ou un cation ammonium de la formule générale $R^5R^6R^7R^8N^+$ dans laquelle $R^5$, $R^6$, $R^7$ et $R^8$ représentent indépendamment les uns des autres de l'hydrogène ou un radical alkyle, ramifié ou non ramifié à 1 à 12 atomes de carbone.

5. Procédé de production des acides 3-$R^1$-3-oxo-prop-1-ène-1,1-diphosphoniques et de leurs sels, répondant à la formule générale (III)

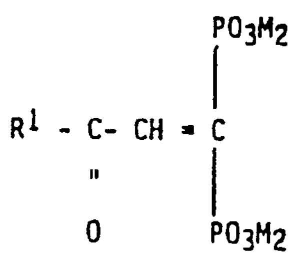

(III)

dans laquelle $R^1$ représente

– un groupe alkyle tertiaire de la formule générale $-(R^2)C(R^3)(R^4)$, où $R^2$ et $R^3$ représentent indépendamment l'un de l'autre un groupe alkyle en $C_1$-$C_3$ et $R^4$ un groupe alkyle en $C_1$-$C_{10}$,

– un groupe cycloalkyle en $C_3$-$C_6$, qui est substitué éventuellement en position 1 par un radical méthyle ou

– un groupe aryle ou hétéroaryle, qui est substitué éventuellement par un halogène, un alcoxy en $C_1$-$C_5$, un dialkylamino en $C_1$-$C_5$ ou un alkyle en $C_1$-$C_5$

– et où M peut être H ou le cation d'une base, caractérisé en ce qu'on fait réagir

(a) un acide 3-$R^1$-3-oxo-1-aminopropane-1,1-diphosphonique de la formule générale (IV)

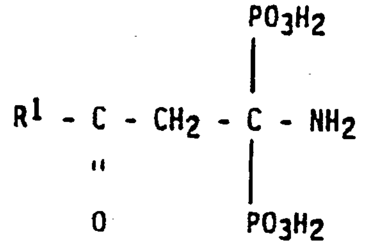 (IV)

dans laquelle $R^1$ a les significations précitées, avec une solution aqueuse ou alcoolique d'hydroxyde alcalin, où le rapport molaire de l'hydroxyde alcalin à la matière première est situé dans la gamme de 5 : 1 à 20 : 1 à des températures comprises dans la gamme de 80 à 150°C.

(b) on traite le mélange réactionnel par un excès d'eau et on fait précipiter le sel alcalin formé du composé de la formule générale (III) par addition d'un alcool miscible en toutes proportions avec l'eau et on le recristallise éventuellement,

(c) on prépare les produits de la réaction de la formule générale (III), dans laquelle M représente H, éventuellement au moyen d'un partenaire de réaction acide et d'une manière connue en soi,

(d) on transforme les produits de la réaction de la formule générale (III), dans laquelle M représente H et d'une manière connue en soi, par addition de partenaires de réaction basiques de la formule $M^+OH^-$, où $M^+$ représente un cation de métal alcalin ou un cation ammonium $R^5R^6R^7R^8N^+$, dans laquelle $R^5$, $R^6$, $R^7$ et $R^8$ représentent, indépendamment les uns des autres, de l'hydrogène ou un radical alkyle, ramifié ou non ramifié, à 1 à 12 atomes de carbone, en des composés de la formule (III) dans laquelle M représente un cation de métal alcalin ou un cation ammonium ayant la signification précitée,

(e) et on isole et on purifie les composés obtenus de la formule (III) par des méthodes connues en soi.

6. Procédé selon la revendication 5, caractérisé en ce que l'on utilise une lessive sodique comme solution d'hydroxyde alcalin.

7. Procédé selon les revendications 5 et 6, caractérisé en ce que l'on réalise la réaction dans la gamme de température de 100 à 140°C.

8. Procédé selon les revendications 5 à 7, caractérisé en ce que le rapport molaire de l'hydroxyde alcalin à la matière première est égal à 12 : 1.

9. Procédé selon les revendications 5 à 8, caractérisé en ce que l'on utilise du méthanol comme alcool miscible avec l'eau en toutes proportions.

10. Procédé selon les revendications 5 à 9, caractérisé en ce que l'on utilise comme partenaire de réaction acide, un acide minéral, un acide organique ou une résine échangeuse d'ions acide.

11. Procédé selon la revendication 10, caractérisé en ce que l'on utilise comme partenaire de réaction acide une résine échangeuse d'ions fortement acide.

12. Procédé selon les revendications 5 à 11, caractérisé en ce que l'on utilise NaOH comme partenaire de réaction basique $M^+OH^-$.

13. Utilisation des composés de la formule générale (III) selon la revendication 1 à 4 comme agent complexant et thresholder.

14. Compositions contenant 1 ou plusieurs composés de la formule générale (III)

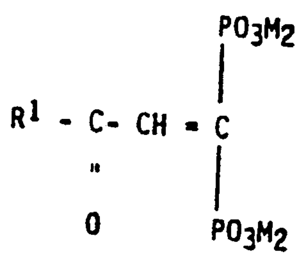 (III)

dans laquelle $R^1$ représente :

– un groupe alkyle tertiaire de la formule générale $-(R^2)C(R^3)(R^4)$, où $R^2$ et $R^3$ représentent indépendamment l'un de l'autre un groupe alkyle en $C_1$-$C_3$ et $R^4$ un groupe alkyle en $C_1$-$C_{10}$,

– un groupe cycloalkyle en $C_3$-$C_6$, qui est substitué éventuellement en position 1 par un radical méthyle

ou

– un groupe aryle ou hétéroaryle, qui est substitué éventuellement par un halogène, un alcoxy en $C_1$-$C_5$, un dialkylamino en $C_1$-$C_5$ ou un alkyle en $C_1$-$C_5$ et

– M peut être H ou le cation d'une base, en concentrations efficaces pour la complexation.

15. Compositions selon la revendication 14, contenant 1 ou plusieurs composés de la formule générale (III), dans laquelle $R^1$, $R^2$, $R^3$, $R^4$ et M ont les significations précitées, en concentrations de 1 à 50 ppm.

16. Compositions selon la revendication 14, contenant 1 ou plusieurs composés de la formule générale (III), dans laquelle $R^1$ représente un groupe alkyle tertiaire de la formule générale $-(R^2)C(R^3)(R^4)$, $R^2$ et $R^3$ un radical méthyle ou éthyle, $R^4$ un radical alkyle à chaîne linéaire ou ramifiée à 3 à 6 atomes de carbone et M un cation de métal alcalin et, de préférence, un ion sodium en concentrations de 5 à 50 ppm.

Fig. 1: Threshold-Wirkung

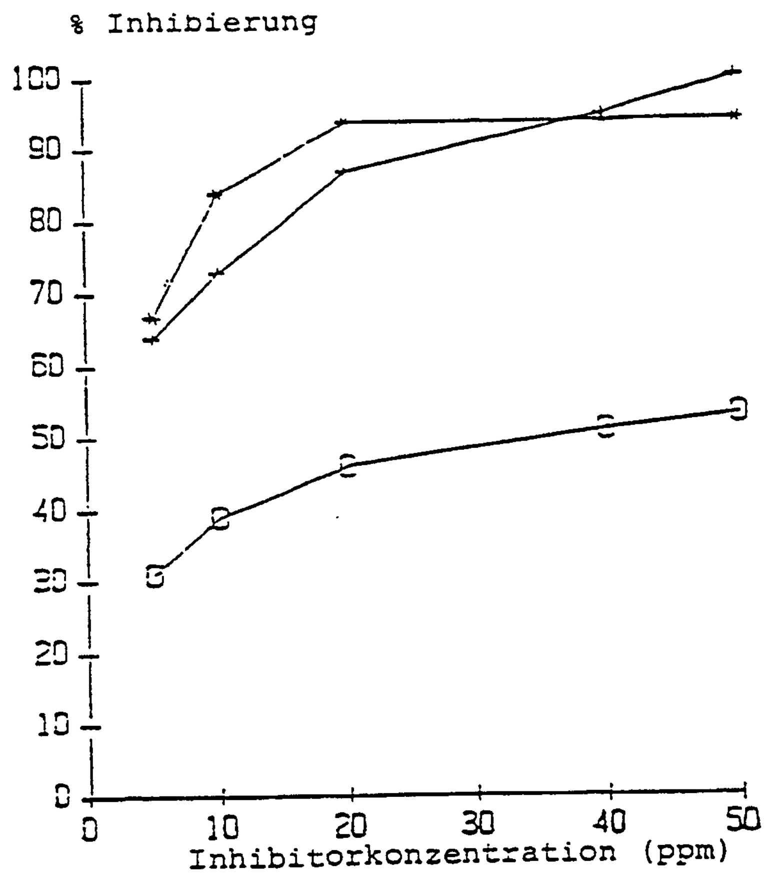


+ : Verbindung gemäß Beispiel 2, als Tetranatriumsalz

* : Verbindung gemäß Beispiel 1, als Tetranatriumsalz

⊖ : Ethylendiphosphonsäure, zum Vergleich